# EUROPÄISCHE PATENTANMELDUNG

(11) **EP 0 781 593 A2**
(43) Veröffentlichungstag der Anmeldung: **02.07.1997**
(21) Anmeldenummer: 96120248.8
(22) Anmeldetag: 17.12.1996
(51) Int. Cl.: B01D 71/56, C08G 69/40

(54) **Verfahren zur Herstellung von Polyetheramidlösungen, unter Verwendung der Polyetheramidlösungen erhältliche dampfsterilisierbare Dialysemembranen sowie Verfahren zur Herstellung dieser Membranen**

(30) Priorität: 28.12.1995 DE 19549001
(71) Anmelder: HOECHST AKTIENGESELLSCHAFT, 65929 Frankfurt am Main (DE); GAMBRO DIALYSATOREN GmbH & CO. KG, D-72373 Hechingen (DE)
(72) Erfinder: Blatter, Karsten, Dr., 65817 Eppstein (DE); Wagener, Reinhard, Dr., 65439 Flörsheim (DE); Bell, Carl Martin, Dr., 72379 Hechingen (DE); Göhl, Hermann Josef, 72406 Bisingen (DE)

(57) **Zusammenfassung**

Es ist bekannt ein oder mehrere Dicarbonsäurederivate der allgemeinen Formel I 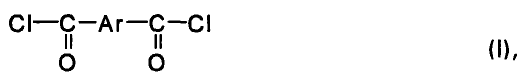 mit
ein oder mehreren aromatischen Diaminen der allgemeinen Formel II 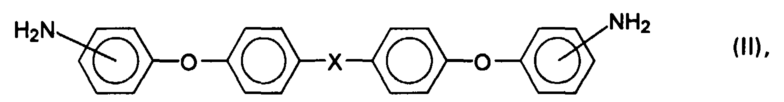 und gegebenenfalls m-Phenylendiamin in aprotischen polaren Lösungsmitteln zu polykondensieren.

Dadurch, daß man in die nach der Beendigung der Polykondensation erhaltene Polymerlösung eine zur Neutralisation des gebildeten HCl ausreichende Menge Ammoniak einleitet und entstehendes Ammoniumchlorid abfiltriert, gelingt es neutrale, salzfreie und besonders lagerstabile Polyetheramidlösungen herzustellen, die ohne Isolierung des Polymers zu Membranen weiterverarbeitbar sind. Resultierende Membranen sind dampfsterilisierbar, chemisch und thermisch stabil und zeigen Leistungsdaten im Bereich guter Highflux-Dialysemembranen.

Flach- und Hohlfasermembranen für die Ultrafiltration.

## Beschreibung

Die Erfindung betrifft ein Verfahren zur Herstellung von Polyetheramidlösungen, die Verwendung dieser Lösungen, Dialysemembrane aus Polyetheramid, die ggf. weitere Polymere als Blendkomponenten enthalten können sowie ihre Herstellung aus Polyetheramidlösungen.

Insbesondere bezieht sich die Erfindung auf ein Verfahren zur Herstellung von Polyetheramidlösungen, bei dem ein oder mehrere Dicarbonsäurederivate der allgemeinen Formel I 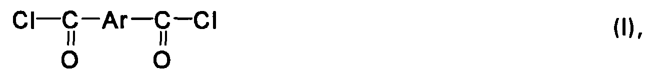 worin
Ar einen zweiwertigen, aromatischen oder heteroaromatischen Rest bedeutet, wobei sich die zwei Carbonylgruppen an nicht benachbarten Ringkohlenstoffatomen, d.h. nicht in ortho-Stellung zueinander befinden, und der Ar-Rest gegebenenfalls mit einem oder zwei verzweigten oder unverzweigten Resten aus der Gruppe der C₁-C₃-Alkyl-, C₁-C₃-Alkoxy-, Aryl-, Aryloxy-, C₁-C₆-Perfluoralkyl-, C₁-C₆-Perfluoralkoxyreste, Fluor, Chlor, Brom und/oder Jod substituiert ist, mit ein oder mehreren aromatischen Diaminen der allgemeinen Formel II 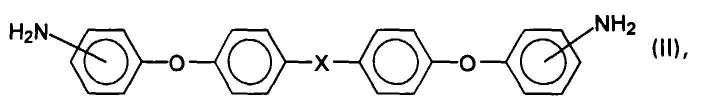 worin
X für eine Gruppe -C(CH₃)₂-, -C(CF₃)₂, -CO-, -SO-, -SO₂-, -CH₂-, -S-, oder -O- oder eine direkte Bindung steht, und gegebenenfalls m-Phenylendiamin in aprotischen polaren Lösungsmitteln polykondensiert werden.

Membranen sind heute in Blutbehandlungsverfahren wie der Hämodialyse oder Plasmaphorese weit verbreitet im Einsatz. Es werden dabei eine Vielzahl von Membranmaterialien eingesetzt, wie beschrieben in: E. Wetzels, A. Colombi, P. Dittrich, H.J. Gurland, M. Kessel, H. Klinkmann in 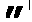 Hämodialyse, Peritonealdialyse, Membranplasmaphorese und verwandte Verfahren", Springer Verlag, 3. Auflage (1986).

Die Membranmaterialien können eingeteilt werden, in zum einen aus synthetischen Polymeren aufgebaute Membranen und zum anderen aus cellulosischen Polymeren hergestellte Membrane, wie z.B. Cuprophan. Die Membrane kommen dabei sowohl in Hohlfasermodulen als auch in Flachmembrankonfiguration zum Einsatz. Bei Membranen aus synthetischen Polymeren wird eine gegenüber aus cellulosischen Materialien hergestellten Membranen verbesserte Blutverträglichkeit, z.B. niedrigere Komplementaktivierung diskutiert.

Als Sterilisationsverfahren wird bei synthetischen Membranen heute überwiegend die Sterilisation mit Ethylenoxid angewandt. Alternativ dazu wird die Dampfsterilisation (20 Min. bei 121°C bei gesättigtem Wasserdampf) oder die Sterilisation bei erhöhter Temperatur eingesetzt (vgl. K.H. Wallhäußer, 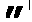 Praxis der Sterilisation, Desinfektion, Konservierung", 3. Auflage, Thieme Verlag, 1981). Zum Beispiel ist in der Patenschrift DE 3936785 die Sterilisation von Polysulfonmembranen mit Heißwasser beschrieben.

Dialysemembrane aus synthetischen Polymeren bestehen häufig neben der strukturbildenden und stabilisierenden Polymerkomponente aus einer weiteren, hydrophilen Komponente und sind so in Form eines Blends oder als Copolymer aufgebaut. Beispiel für hydrophile Komponenten sind Polyvinylpyrrolidon (PVP) oder Polyethylenglykol (PEG). Die Membran muß dann in ihrer Feinstruktur so hergestellt werden, daß die Sterilisation diese Struktur und damit die Eigenschaften nicht negativ verändert.

Polyamidmembranen nehmen heutzutage eine herausragende Stellung in der Dialyse, Hemodiafiltration und Hemofiltration ein. Dies ist auf ihre gute Leistung und ihre Blutverträglichkeit zurückzuführen (siehe in 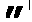 Polyamide - The Evolution of a Synthetic Membrane for Renal Therapy", ed. by S. Shaldon, K.M. Koch, contribution to Nephrology Nr. 96, Karger Verlag 1992).

Die Verwendung von Polyetheramiden für die Herstellung von Membranen für technische Anwendungen ist bereits bekannt.

Zum näheren Stand der Technik werden folgende Druckschriften genannt:
EP-A-0 543 171 = D1,
EP-A-0 382 009 = D2,
US 4,900,443 = D3,
EP-A-0 068 459 = D4 und
DE-A-22 25 735 = D5.

D1 beschreibt die Vorteile von asymmetrischen porösen Membranen aus aromatischen Polyetheramiden oder Polyaramiden gegenüber anderen Membranmaterialien wie Zellulose oder Polyethersulfon. Setzt man Lösungen von Polyetheramiden vor der Phaseninversion hydrophile Polymere, die sich homogen mit den Polyaramiden mischen, wie z.B. Polyvinylpyrrolidon (PVP) oder Polyethylenglykol (PEG) zu, so können Membrane mit hoher Hydrophilie erhalten werden (D2).

Technisch besonders vorteilhaft für die Membranpräparation ist die Verwendung von Polyetheramidlösungen, die direkt durch Reaktion der entsprechenden Monomere im zur Membranherstellung geeigneten Lösungsmittel erhalten werden. In diesem Fall kann die aufwendige Isolierung des Polymeren entfallen.

Hierzu offenbart die D1 die Reaktion von aromatischen Disäurechloriden mit aromatischen Diaminen zu Polyaramiden oder Polyetheramiden in polar aprotischen Lösungsmitteln wie N-Methylpyrrolidon oder Dimethylacetamid. Gegebenenfalls wird zur Verbesserung der Löslichkeit vor der Reaktion zusätzlich Salz, wie z.B. Kalziumchlorid, zugesetzt. Bei der Reaktion von Disäurechlorid und Diamin wird Salzsäure frei, die nur lose an das basische Lösungsmittel gebunden ist und ohne anschließende Neutralisation zu starker Korrosion von Anlagenteilen und zur Hydrolyse des gebildeten Polyaramids führt.

Dieses technische Problem wird bisher durch Zugabe von starken anorganischen Basen wie Lithiumhydroxid oder Kalziumoxid gelöst. Die durch Reaktion dieser Basen mit der Salzsäure entstehenden Salze (Lithiumchlorid, bzw. Kalziumchlorid) sind in den gewählten Lösungsmitteln gut löslich und verbleiben in der Polyaramidlösung. In typischen Beispielen beträgt die Salzkonzentration einer fertigen Polyaramidlösung (Polymerkonzentration 10%) zwischen 1 und 5%, abhängig von der Struktur der verwendeten Monomere. Für viele Polyaramidstrukturen ist dieser Salzgehalt zur Erhöhung der Löslichkeit notwendig, da ansonsten keine stabilen Lösungen erhalten werden können. Auch ein Salzzusatz zu Gießlösungen von Polyaramiden ist bekannt.

In diesem Zusammenhang schlägt die D3 den Einsatz eines anorganischen Löslichkeitsverbesseres in Salzform vor. Aufgeführt werden in der D3 Halogenide, Nitrate, Sulfate und/oder Perchlorate der Alkali- oder Erdalkalimetalle, vorzugsweise LiCl.

Die Anwesenheit von Salzen in den zur Membranherstellung verwendeten Polyaramidlösungen hat auch einen Einfluß auf die Membraneigenschaften. In der D4 wird ein Zusatz von hydratisiertem Magnesiumchlorid mit 6 Mol Hydratwasser zu einer Gießlösung zur Herstellung von Membranen aus einem film- und faserbildenden Polyaramid beschrieben. Allerdings werden die Membraneigenschaften durch Salzzusatz nicht zwangsläufig in die gewünschte Richtung verändert. So kann beispielsweise ein Zusatz von LiCl die thermische Stabilität der resultierenden Membranen erniedrigen.

Verwendet man die nach dem Stand der Technik verfügbaren salzhaltigen Polyaramidlösungen für die Herstellung von Membranen nach dem Phaseninversionsverfahren, so müssen nach der Koagulation der Polyaramidlösungen in einem Nichtlösemittel, wie z.B. Wasser, die Salze aus der Membran ausgewaschen werden. Dieser Vorgang ist mit erheblichem Aufwand verbunden, besonders dann, wenn für Anwendungen im medizinischen Bereich, wie zum Beispiel beim Einsatz als Dialysemembran, ein möglichst geringer Salzgehalt der fertigen Membran anzustreben ist.

Salzfreie Polyetheramid-Lösungen lassen sich nach dem Stand der Technik (D5) durch Wiederauflösen von ausgefälltem, gewaschenem und getrocknetem Poly(ether)amid-Pulver erhalten. Dieses Verfahren ist aufwendig und im allgemeinen mit dem Verbrauch beträchtlicher Mengen von Lösungsmittel zum Spülen und von Waschwasser verbunden.

Angesichts des hierin genannten und diskutierten Standes der Technik war es mithin eine Aufgabe der Erfindung, ein weiteres Verfahren zur Herstellung von salzfreien oder möglichst salzarmen Polyetheramidlösungen zur Verfügung zu stellen.

Eine weitere Aufgabe der Erfindung bestand darin, lagerstabile Lösungen von Polyaramiden oder Polyetheramiden zu schaffen, aus denen sich Membranen fertigen lassen.

Ebenfalls Aufgabe der Erfindung ist eine dampfsterilisierbare Dialysemembran mit guter Blutverträglichkeit und hoher Selektivität.

Noch eine Aufgabe der Erfindung ist es, ein Verfahren zur Herstellung von dampfsterilisierbaren Dialysemembran mit guter Blutverträglichkeit und hoher Selektivität anzugeben.

Gelöst werden diese sowie weitere nicht näher angegebene Aufgaben im Hinblick auf die Schaffung von möglichst salzfreien Polyetheramidlösungen bei einem Verfahren der eingangs erwähnten Gattung durch die Merkmale des kennzeichnenden Teils des Anspruchs 1. Zweckmäßige Verfahrensmodifikationen werden in den auf Anspruch 1 rückbezogenen Ansprüchen unter Schutz gestellt.

Dadurch, daß man in die nach der Beendigung der Polykondensation erhaltene Polymerlösung eine zur Neutralisation des gebildeten HCl ausreichende Menge Ammoniak einleitet und entstehendes Ammoniumchlorid abfiltriert, gelingt es neutrale Polyetheramidlösungen herzustellen,
- die salzfrei sind,
- die lagerstabil sind,
- die auch in hoher Konzentration als homogene Lösung vorliegen, und
- die ohne Isolierung des Polymers zu Membranen weiterverarbeitbar sind.
- Außerdem haben die resultierenden Membranen unerwartet vorteilige Eigenschaften.

Die Neutralisation der Polykondensationslösung durch direkte Einleitung von gasförmigem Ammoniak in die oben beschriebenen salzsauren Reaktionslösungen ist dabei verglichen mit dem Stand der Technik (D1 und D5) besonders vorteilig, da sie vor allem eine aufwendige Isolierung des Polymers als Pulver umgeht.

Die Salzsäure wird zu Ammoniumchlorid neutralisiert, das in den polaren aprotischen Lösungsmitteln wie N-Methylpyrrolidon oder N,N-Dimethylacetamid annähernd unlöslich ist und durch einfache Filtration entfernt werden kann.

Die Löslichkeit von Ammoniumchlorid beträgt deutlich unter 0,1 %, so daß dieses Salz durch einfache Filtration weitestgehend entfernt werden kann.

Die Unlöslichkeit von Ammoniumchlorid in den Lösungsmitteln N-Methylpyrrolidon oder N,N Dimethylacetamid wurde zwar schon zur Reduktion des Salzgehaltes von Poly-meta-Phenylenisophthalamid-Lösungen für die Herstellung von Fasern eingesetzt (US 438 9521). Allerdings war ein signifikanter Restgehalt von mehreren Prozent löslicher Salze wie z.B. Kalziumchlorid, notwendig. Ohne diesen Salzzusatz konnten dagegen keine stabilen Lösungen von Poly-meta-Phenylenisophthalamid in N-Methylpyrrolidon erhalten werden.

Trotz des erheblichen Aufwandes einer zweistufigen Polykondensation mit zusätzlichen Aufarbeitungsschritten konnte folglich nach dieser Methode der Salzgehalt der Lösungen nicht beliebig eingestellt werden, insbesondere war ein Salzgehalt von Null oder annähernd Null ausgeschlossen.

Die erfindungsgemäßen Polyaramidlösungen sind dagegen ohne jeden Salzzusatz in hohen Konzentrationen in den gewünschten Lösungsmitteln erhältlich, eine zweistufige Neutralisation unter Bildung löslicher Salze ist überflüssig.

In bevorzugter Ausführungsform der Erfindung werden als Verbindungen der Formel I Terephthalsäuredichlorid und/oder Isophthalsäuredichlorid eingesetzt. Bevorzugte Substanzen der allgemeinen Formel II sind unter anderem
2,2'-Bis[4-(4'-aminophenoxy)-phenyl]-propan,
Bis[3-(3'-aminophenoxy)-phenyl]-sulfon,
Bis[4-(4'-aminophenoxy)-phenyl]-sulfon,
Bis[4-(4'-aminophenoxy)-phenyl]-methan und/oder
2,2'-Bis[4-(4'-aminophenoxy)-phenyl]-hexafluorpropan.

Von den aromatischen Diaminen vom Typ II können bis zu 50 Mol % durch m-Phenylendiamin ersetzt sein.

Ganz besonders bevorzugt werden Polymerisatlösungen hergestellt als Polykondensate aus Terephthalsäuredichlorid und Isophthalsäuredichlorid als Dicarbonsäuredichloride und 2,2'-Bis[4-(4'-aminophenoxy)-phenyl]-propan als Aminkomponente, wobei weiterhin bevorzugt ein Anteil von weniger als 50 mol % der genannten Aminkomponente durch m-Phenylendiamin ersetzt ist.

Die Lösungskondensation aromatischer Dicarbonsäuredichloride der Formel I mit aromatischen Diaminen der Formel II und gegebenenfalls m-Phenylendiamin und/oder Diaminen der Formel III erfolgt in aprotischen polaren Lösungsmitteln, bevorzugt vom Amidtyp. Besonders günstig sind Lösungsmittel N-Methyl-2-pyrrolidon (NMP) oder N,N-Dimethylacetamid oder Gemische daraus.

Die Polykondensationstemperaturen liegen üblicherweise zwischen -20°C und + 120°C, bevorzugt zwischen +10°C und +100°C. Besonders gute Ergebnisse werden bei Reaktionstemperaturen zwischen +10°C und +80°C erzielt.

Die Polykondensationsreaktionen werden vorzugsweise so geführt und die Menge der zu polykondensierenden Monomeren so gewählt, daß nach Abschluß der Reaktion, die Konzentration des Polymerisats in der Lösung zwischen 3 und 50 Gew.-% ist. Vorzugsweise liegen zwischen 5 und 35 Gew.-% an Polykondensat in der Lösung vor.

Die Polykondensation kann in üblicher Weise, z. B. durch Zugabe von monofunktionellen Verbindungen, wie Benzoylchlorid gestoppt werden. Nach Beendigung der Polykondensation, d.h. wenn die Polymerlösung den zur Weiterverarbeitung erforderlichen Staudinger-Index erreicht hat, wird der entstandene an das Amidlösungsmittel gebunde Chlorwasserstoff durch Einleitung von Ammoniak neutralisiert. Nach dem Neutralisieren werden die Lösungen filtriert und gegebenenfalls entgast und sind so über mehrere Wochen lagerstabil, ohne daß sich ihre im Bezug auf die Membranherstellung wichtigen Eigenschaften ändern. Die Konzentration der Lösungen und das Molekulargewicht des Polymeren (Staudinger-Index) bleiben als wichtige Einflußgrößen auf Membraneigenschaften wie Porosität, mechanische Stabilität, Permeabilität und Rückhaltevermögen im wesentlichen unverändert.

Die erfindungsgemäß hergestellten Polyetheramide gewährleisten dabei insbesondere überraschend ohne Salzzusatz die Verfügbarkeit von hochkonzentrierten Lösungen. Konzentrationen von z.B. 24 % in polar aprotischen Lösungsmittel wie z.B. N-Methylpyrrolidon oder Dimethylacetamid sind problemlos möglich.

Die gemäß dem Verfahren der Erfindung erhaltenen Polyetheramide haben einen Staudinger Index von 0.5 bis 5 dl/g (gemessen in N-Methylpyrrolidon mit Zusatz von 0.05 % LiBr), bevorzugt zwischen 0.8 und 2.0 dl/g. Hierbei wird der bevorzugte Bereich im Gegensatz zu anderen bekannten Verfahren (Schmelze-Verfahren zur Herstellung von Polyetheramiden) problemlos erreicht. Die höheren Molekulargewichte (korrespondierend zu höheren Staudinger Indices ( > etwa 0.8 dl/g )) begünstigen insbesondere vorteilig filmbildende Prozesse für die Herstellung von Membranen. Bei einer solchen Anwendung führt das höhere Molekulargewicht nämlich zu einer höheren Verarbeitungs- (Spinn-) geschwindigkeit.

Weiterhin wurde gefunden, daß die erfindungsgemäßen salztreien Lösungen von Polyaramiden eine deutlich niedrigere Viskosität besitzen, im Vergleich zu Lösungen gleicher Konzentration, die stöchiometrischen Mengen an Salz, wie z.B. Kalziumchlorid, enthalten, wie sie bei der Neutralisation der Polykondensationslösungen z.B. mit Kalziumoxid erhalten werden (Beispiel 2). Die niedrige Viskosität hat für die Herstellung von Hohlfasermembranen sehr große Vorteile, da auch höhere Polymerkonzentrationen noch problemlos verarbeitbar sind und dadurch bei der technischen Hohlfaserproduktion kürzere Filtrationszeiten für die Lösungen und höhere Spinngeschwindigkeiten realisiert werden können. (Tabelle 5)

Insbesondere vorteilhaft kann man die erhaltenen Lösungen nach Filtration ohne Isolation des Polymers weiterverarbeiten.

Aufgrund dieser Vorteile eignen sich die in der Erfindung hergestellten Polyetheramidlösungen beonders gut zur Herstellung semipermeabler, poröser, asymmetrischer Membranen. Günstig ist die Verwendung zur Herstellung von Flachmembranen. Ganz besonders bevorzugt ist die Herstellung von Hohlfasermembranen.

Gegenstand der Erfindung ist demnach auch eine Membran, die aus einem Polyamid, i.s. Polyetheramid, aufgebaut ist, das die geforderte Temperaturstabilität aufweist und gleichzeitig die guten Blutverträglichkeitseigenschaften von Polyamid hat. Insbesondere handelt es sich um eine semipermeable, poröse, asymmetrische Membran aufweisend ein Polyaramid, enthaltend als wiederkehrende Struktureinheiten ein oder mehrere Struktureinheiten der allgemeinen Formel I' 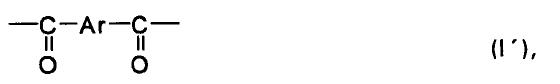 worin
Ar einen zweiwertigen, aromatischen oder heteroaromatischen Rest bedeutet, wobei sich die zwei Carbonylgruppen an nicht benachbarten Ringkohlenstoffatomen, d.h. nicht in ortho-Stellung zueinander befinden, und der Ar-Rest gegebenenfalls mit einem oder zwei verzweigten oder unverzweigten Resten aus der Gruppe der C₁-C₃-Alkyl-, C₁-C₃-Alkoxy-, Aryl-, Aryloxy-, C₁-C₆-Perfluoralkyl-, C₁-C₆-Perfluoralkoxyreste, Fluor, Chlor, Brom und/oder Jod substituiert ist,
und bezogen auf die Summe von (II') und (III') zu 50 bis 100 mol % Struktureinheiten der Formel (II') 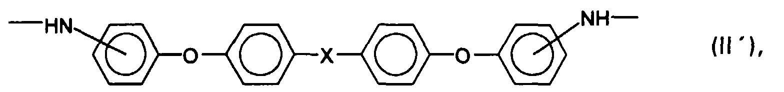 worin
X für eine Gruppe -C(CH₃)₂-, -C(CF₃)₂, -CO-, -SO-, -SO₂-, -CH₂-, -S- oder -O- oder eine direkte Bindung steht,
und bezogen auf die Summe von (II') und (III') zu 0 bis 50 mol % Struktureinheiten der Formel (III') 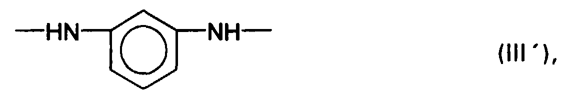 wobei die Membran nach dem Phaseninversionsverfahren erhalten wird, bei dem eine homogene Polymerisatlösung mit einem eine Fällflüssigkeit aufweisenden Fällbad kontaktiert wird, wobei die Fällflüssigkeit mit dem Lösungsmittel der Polymerisatlösung mischbar ist und die in der Polymerisatlösung gelösten Polymerisate als Membran ausgefällt werden,
wobei die Polymerisatlösung einen Chloridgehalt von weniger als 0,1 Gewichtsprozent bezogen auf das Gesamtgewicht der Polymerisatlösung aufweist.

In den Struktureinheiten der allgemeinen Formel I' steht ebenso wie in den vorerwähnten Verbindungen der allgemeinen Formel I Ar für einen zweiwertigen, aromatischen oder heteroaromatischen Rest. Hierzu gehören im Rahmen der Erfindung besonders bevorzugt folgende Reste:

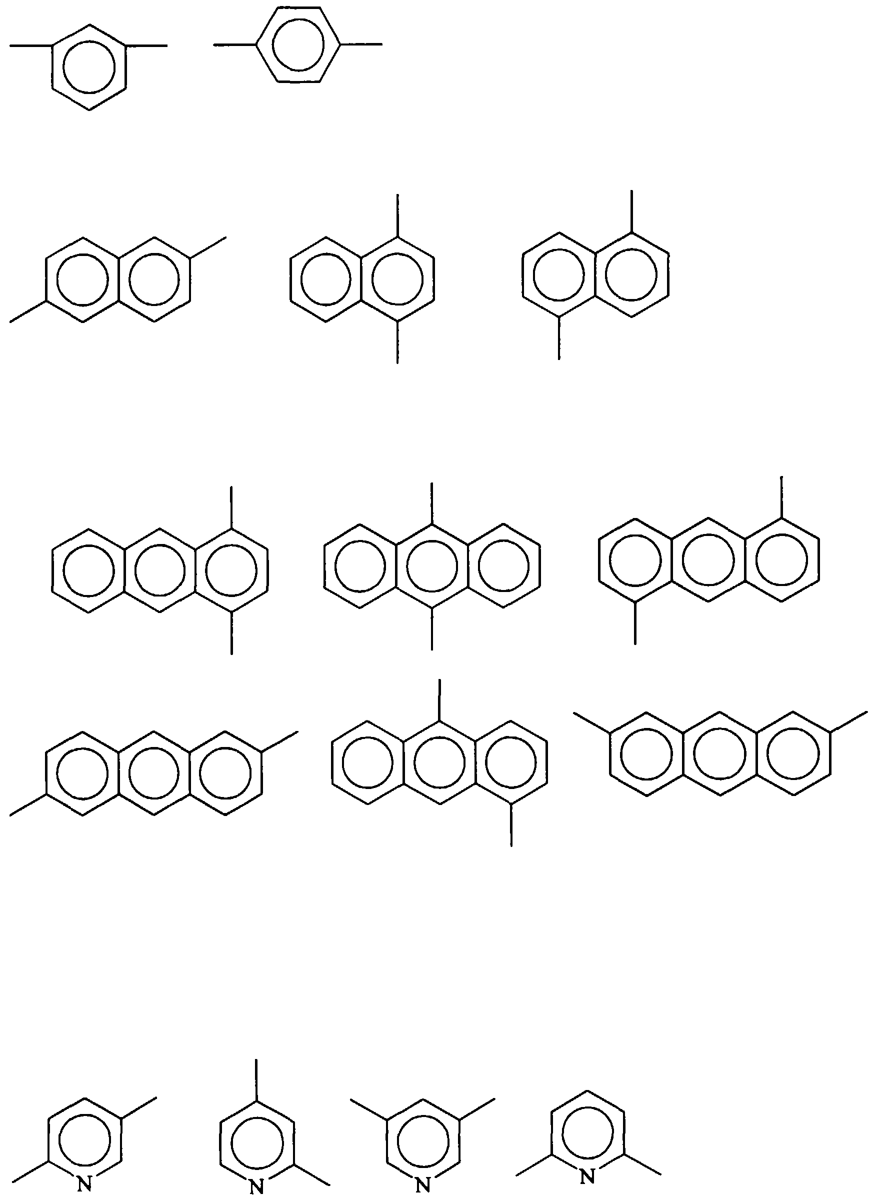

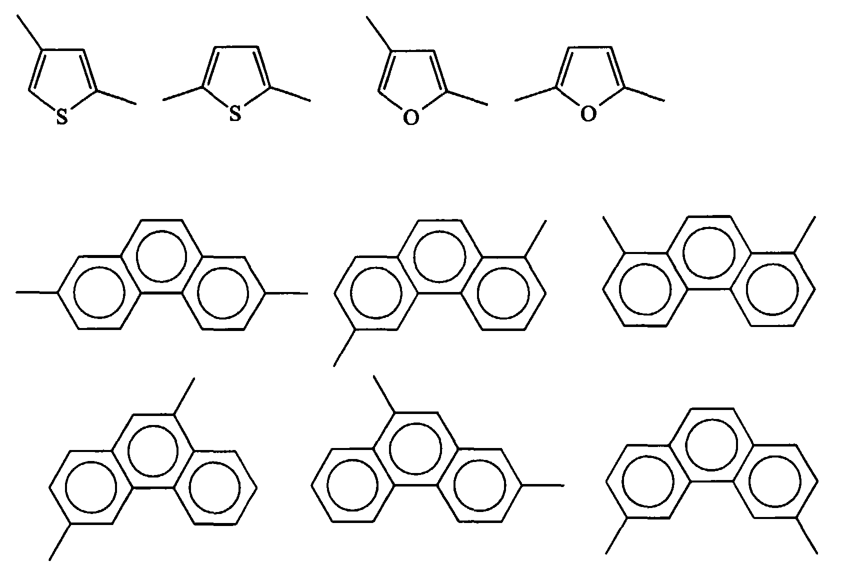

In bevorzugter Ausführungsform kennzeichnet sich die erfindungsgemäße Membran dadurch, daß sie auf einer für strömungsfähige Medien durchlässigen Trägerschicht aus Kunststoffvlies oder auf einem Gewebe angeordnet ist.

Weterhin bevorzugt ist die Membran der Erfindung als Hohlfasermembran ausgeführt.

Die bei der Herstellung der Polyaramide üblicherweise verwendeten Lösungsmittel N-Methylpyrrolidon bzw. Dimethylacetamid werden auch besonders bevorzugt für die Herstellung von Membranen eingesetzt. Das heißt, daß das aufwendig aus NMP oder DMAc isolierte Polymer anschließend wieder in eben diesen Lösungsmittel aufgelöst wird. Dies entfällt beim Einsatz erfindungsgemäßer Lösungen.

Zur Erfindung gehört daher auch ein Verfahren zur Herstellung einer semipermeablen, porösen, asymmetrischen Membran, bei dem eine Lösung enthaltend ein Polymerisat wenigstens eines Polyaramids enthaltend als wiederkehrende Struktureinheiten ein oder mehrere Struktureinheiten der allgemeinen Formel I' 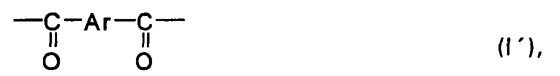 worin
Ar einen zweiwertigen, aromatischen oder heteroaromatischen Rest bedeutet, wobei sich die zwei Carbonylgruppen an nicht benachbarten Ringkohlenstoffatomen, d.h. nicht in ortho-Stellung zueinander befinden, und der Ar-Rest gegebenenfalls mit einem oder zwei verzweigten oder unverzweigten Resten aus der Gruppe der C₁-C₃-Alkyl-, C₁-C₃-Alkoxy-, Aryl-, Aryloxy-, C₁-C₆-Perfluoralkyl-, C₁-C₆-Perfluoralkoxyreste, Fluor, Chlor, Brom und/oder Jod substituiert ist,
und bezogen auf die Summe von (II') und (III') zu 50 bis 100 mol % Struktureinheiten der Formel (II') 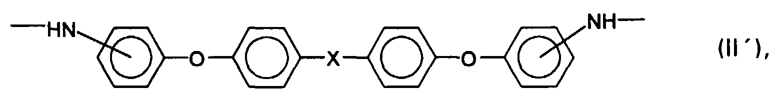 worin
X für eine Gruppe -C(CH₃)₂-, -C(CF₃)₂, -CO-, -SO-, -SO₂-, -CH₂-, -S- oder -O- oder eine direkte Bindung steht,
und bezogen auf die Summe von (II') und (III') zu 0 bis 50 mol % Struktureinheiten der Formel (III') 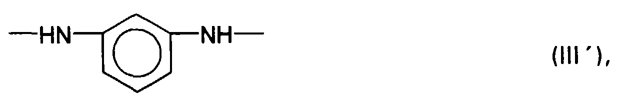 mit einem eine Fällflüssigkeit aufweisenden Fällbad kontaktiert wird, wobei die Fällflüssigkeit mit dem Lösungsmittel der Polymerisatlösung mischbar ist und die in der Polymerisatlösung gelösten Polymerisate als Membran ausgefällt werden, wobei das Verfahren dadurch ausgezeichnet ist, daß man als Polymerisatlösung eine erfindungsgemäße durch Polykondensation erhaltene Lösung einsetzt.

Gegebenenfalls werden übliche Zusätze wie PEG oder PVP zur Polymerisatlösung zugesetzt.

In bevorzugter Verfahrensabwandlung wird die aus der Polykondensation resultierende Lösung ohne Isolation des Polymerisats zur Membranherstellung nach dem Phaseninversionsverfahren verwendet.

Bei der Phaseninversionstechnik (s. R.E. Kesting, 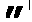 Synthetic Polymeric Membranes", 2nd Ed., 1985) wird eine Membran aus einer Polymerlösung bestehend aus Lösungsmittel wie N-Methylpyrrolidon (NMP) oder Dimethylacetamid (DMAc) oder Mischungen daraus, aus dem Polyetheramid und im weiteren aus hydrophilen Komponenten wie z.B. PVP oder PEG, ausgefällt. Die homogene Lösung wird durch eine Ringspaltdüse (bei Hohlfasern) oder eine Schlitzdüse (bei Flachmembranen) in ein Spül- bzw. Fällbad eingeleitet. Als Nichtlösungsmittel kommen alle mit dem Lösungsmittel (NMP oder DMAc) vollständig mischbaren Flüssigkeiten in Betracht. Dies sind beispielsweise Wasser, ein oder mehrwertige Alkohole, organische Lösungsmittel wie Aceton oder Mischungen dieser Lösemittel untereinander oder mit dem Lösemittel. Bevorzugt werden hier Wasser oder eine Mischung aus Wasser und NMP bzw. DMAc zusammen mit PVP oder PEG eingesetzt. Durch gezielte Kombination von Polyetheramid, hydrophiler Komponente und Nichtlösungsmittelsystem und der Spinnparameter Temperatur und Druck kann die Porenmorphologie der Membran eingestellt werden, welche die Leistung der Membran, ihre Dampfsterilisierbarkeit und Blutverträglichkeit mitbestimmt.

Die Konzentration an Polyetheramid in der Spinnlösung beträgt für die obig angegebenen Molekulargewichte 5-25 Gew. % und für die hydrophile Komponente 0 bis 20 Gew. %. Das Nichtlösungsmittelsystem ist zusammengesetzt aus Wasser mit 0 bis 60 Gew.: % Lösungsmittel und 0 bis 10 % hydrophile Komponente. Es werden asymmetrische Membranen, wie in EPA 0 305 787 A1 beschrieben, hergestellt.

Mit der asymmetrisch aufgebauten 3-Schichtstruktur (wie sie prinzipiell in der EP-A-0 305787 in den Figuren 1 und 2 dargestellt wird) mit den kleinsten Porendurchmessern an der Membranoberfläche, wird eine über die Dialysebehandlungszeit gleichbleibende Trennleistung der Membran gewährleistet, d. h. eine zeitlich konstante Abtrennung der urämischen Toxine und Moleküle mit mittlerem Molekulargewicht bis etwa 50.000 Dalton, wie z.B. b2-Mikroglobulin oder Faktor D.

Die erste Schicht auf der blutkontaktierenden Hohlfaserseite besteht aus einer sehr dünnen Haut, an der die Trennung nach der Molekülgröße geschieht. Daraus ergibt sich, daß die Trennung an der Oberfläche stattfindet, und nicht innerhalb der Membran, so daß keine Proteine in die Membran eindringen können. Die zweite Zwischenschicht besteht aus einer ca 10 mm dicken porösen Schwammstruktur, die die 1. Schicht stabilisiert und durch einen minimalen diffusiven und konvektiven Strömungswiderstand ausgezeichnet ist.

Die dritte Schicht, die 80 % der Membrandicke umfaßt, liefert hohe mechanische Stabilität und ermöglicht durch minimalen konvektiven und diffusiven Widerstand bei großporiger Außenfläche einen schnellen Abtransport der abgetrennten Moleküle in den Dialysatkreislauf.

Auf diese Weise hergestellte Dialysemembrane besitzen eine chemische und thermische Stabilität, die für die Durchführung einer Dampfsterilisation (121°C, 20 min) ausreichend ist und zeigen Membranleistungsdaten, die im Bereich guter Highflux-Dialysemembrane liegen.

Die nachfolgenden Beispiele sollen die erfindungsgemäßen Dialysemembrane und das Verfahren zu ihrer Herstellung näher erläutern:

### Beispiel 1

### Herstellung salzfreier Polyetheramidlösungen

In einem Edelstahlreaktor mit Wendelrührer werden die Diamine bei 20°C in den in Tabelle 1 angegebenen Mengen in N-Methylpyrrolidon gelöst. Zu dieser Lösung werden die entsprechenden Mengen Terephtalsäure- bzw. Isophtalsäuredichlorid (siehe Tabelle) möglichst schnell zudosiert. Man beobachtet eine spontane Temperaturerhöhung auf 40-60°C sowie ein Ansteigen der Viskosität. Nachdem die Viskosität ihren Maximalwert erreicht hat, werden die noch vorhandenen Amino-Endgruppen durch Zugabe stöchiometrischer Mengen Benzoylchlorid verschlossen. Man läßt noch 15 min. nachreagieren und neutralisiert die gebildete HCl anschließend durch Einleitung von gasförmigem Ammoniak bei Temperaturen zwischen 40 und 110°C. Durch die Neutralisationswärme steigt die Temperatur der Reaktionslösung meßbar an. Nach Abklingen der Exothermie wird der in der Lösung enthaltene Restammoniak durch Stickstoff verdrängt und anschließend das ausgefallene Ammoniumchlorid über ein Gewebefeinfilter abfiltriert. Eine Analyse der Lösungen auf Restgehalt an Chloridionen ergibt einen Gehalt von « 0,1 % Chlorid.

Man erhält klare, stabile Lösungen (analytische Daten siehe Tabelle 1), die über mehrere Wochen lagerstabil sind und direkt- ggf. nach Verdünnung und Zusatz von Polyvinylpyrrolidon oder Polyethylenglykol zu Dialysemembranen verarbeitet werden können.

**Tabelle 1**

| Polymer | Diamin 1 [kg] | Diamin 2 [kg] | NMP [kg] | TPC [kg] | IPC [kg] | Viskosität d. Lösung [mPas] | Staudinger Index*⁾ [dl/g] |
|---|---|---|---|---|---|---|---|
| 1 | 5,33 | - | 39,7 | 2,16 | 0,38 | 2800 | 0,98 |
| 2 | 3,73 | 0,98 | 28,4 | 3,58 | - | 13340 | 0,89 |
| 3 | 3,21 | 0,36 | 27,0 | 1,75 | 0,44 | 3700 | 0,83 |
| 4 | 5,34 | - | 39,7 | 2,54 | - | 3300 | 1,05 |

| | | | | | | | |
|---|---|---|---|---|---|---|---|
| *⁾(NMP mit 0,05 % LiBr, 25°C) | | | | | | | |
| Diamin 1 = 2,2'-Bis[4-(4'-aminophenoxy)-phenyl]-propan Diamin 2 = m-Phenylendiamin NMP = N-Methylpyrrolidon TPC = Terephthalsäuredichlorid IPC = Isophthalsäuredichlorid | | | | | | | |

### Beispiel 2

### Einfluß des Salzgehaltes auf die Lösungsviskosität von Polyetheramidlösungen

Die Viskosität einer 19,7 %igen Lösung von Polymer 1 mit einem Staudinger Index von 1,15 dl/g in N-Methylpyrrolidon beträgt bei 25°C 79.000 m·Pa·s. Eine analoge Lösung, die eine Menge an Kalziumchlorid enthält (4,1 %), welche durch stöchiometrische Neutralisation mit Kalziumoxid erhalten wird, besitzt dagegen eine Viskosität von 112.000 m·Pa·s.

Setzt man der Lösung von Polymer 2 (Beispiel 1) 3 % Kalziumchlorid zu, so steigt die Viskosität von 13340 auf 16200 m·Pa·s an.

### Beispiel 3

### Herstellung und Charakterisierung der Membrane

In Übereinstimmung mit der oben beschriebenen Technik wurden aus Polyetheramidlösungen, wie in Beispiel 1 beschrieben, Hohlfasern gesponnen. Die Spinnlösungen wurden hergestellt durch Einrühren von PVP und entsprechende Verdünnung der Polykondensationspolyetheramidlösung (i.e. ohne Isolation des Polymers oder andere Reinigungs- und Trennschritte) mit Lösungsmittel zwischen 20°C und 80°C und Weiterrühren über 6 h. Die Polymerlösung wurde durch 2 mm Filter filtriert und anschließend entgast. Die Hohlfasern wurden mit den Dimensionen 215 mm Innendurchmesser und 50 mm Wandstärke hergestellt. Die Fasern werden bei erhöhter Temperatur (50-80°C) mit pyrogenfreiem Wasser gewaschen, getrocknet, bei 121°C über 20 Min. mit gesättigtem Wasserdampf dampfsterilisiert und bzgl. ihrer Membranleistung charakterisiert. Dabei wurden folgende Abkürzungen verwendet:
- Lp(H₂O): Hydraulische Permeabilität von VE-Wasser
- Lp(Alb): Hydraulische Permeabilität einer 6 %igen Albuminlösung in Wasser
- P(Cl): Diffusive Permeabilität als Maß für die Harnstoff Clearance
- Sk(Myo): Siebkoeffizient für eine 0.02 % Myoglobinlösung
- Sk(Alb): Siebkoeffizient für eine 6 % Albuminlösung

Lp und P(Cl)- Werte wurden gemessen nach Methoden wie in 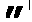 Evaluation of Hemodialysis and Dialysis Membranes", NIH-Veröffentlichung 77-1294 (1977) beschrieben.

Sk-Werte wurden nach DIN 58353, Teil 2 C3 (1988) gemessen.

Die Eigenschaften der Membranen liegen im Bereich von guten Highflux-Dialysemembranen.

### Beispiel 3.1: Membrane aus Polymer 1

Für die in der Tabelle 2 beschriebenen Membranen wurde als Polyetheramid das Polykondensat aus Terephthalsäuredichlorid/Isophthalsäuredichlorid im Molverhältnis 8:2 als Säurekomponente und 2,2'-Bis[4-(4'-aminophenoxy)-phenyl]-propan als Diaminkomponente verwendet (= Polymer 1, Beispiel 1). Die verwendeten Konzentrationen an Polyetheramid und PVP sind der Spalte 1 in Tabelle 2 zu entnehmen. Als Nichtlösungsmittelsystem wurde Wasser verwendet. Der Tabelle 2 entnimmt man insbesondere die Leistungsdaten dampfsterilisierter Membranen.

**Tabelle 2**

| Polyetheramid aus {8:2 (Terephthalsäuredichlorid/Isophthalsäuredichlorid)}-(2,2'-Bis[4-(4'-aminophenoxy)-phenyl]-propan)-Polykondensat (Polymer 1, Beispiel 1) | | | | | | | |
|---|---|---|---|---|---|---|---|
| Spinnlösungszusammensetzung*⁾ [Gew.-% = T] | Lp [cm/s·bar·10⁻⁴] | | | P(Cl) [10⁻⁴cm/s] | Sk(Myo) nach 15 min [%] | Sk(Myo) nach 60 min [%] | Sk(Alb) [%] |
| | Lp(H₂O) | Lp(Alb) | Lp(H₂O) nach Albuminkontakt | | | | |
| 11T Polyetheramid | 56 | 5,6 | 73 | 12,9 | 54 | 63 | 2,7 |
| 3T PVP K90 | | | | | | | |
| 11T Polyetheramid | 35 | 5,0 | 31 | 14,1 | 41 | 37 | 0,5 |
| 3T PVP K90 | | | | | | | |
| 2,5T PVP K30 | | | | | | | |
| 10T Polyetheramid | 62 | 5,3 | 57 | 15,9 | 53 | 60 | 2,5 |
| 3T PVP K90 | | | | | | | |

| | | | | | | | |
|---|---|---|---|---|---|---|---|
| *) Lösungsmittel: NMP; Nichtlösungsmittelsystem: Wasser | | | | | | | |
| PVP = Polyvinylpyrrolidon | | | | | | | |

### Beispiel 3.2: Membrane aus Polymer 2

In Beispiel 3.2 wurde das Polymer 2 (Tabelle 1, Beispiel 1) eingesetzt. Insbesondere handelt es sich bei der dampfsterilierten Membran, deren Leistungsdaten bestimmt wurden, um eine Polyetheramidmembran aus einem Polykondensat aus Terephthalsäuredichlorid/Isophthalsäuredichlorid im Molverhältnis 8:2 als Säurekomponente und 2,2'-Bis[4-(4'-aminophenoxy)-phenyl]-propan/m-Phenylendiamin im Molverhältnis 5:5 als Diaminkomponente. Die verwendeten Konzentrationen an Polyetheramid und PVP sind der Spalte 1 in Tabelle 3 zu entnehmen. Das Nichtlösungsmittelsystem bestand aus 70 Gew.-% Wasser und 30 Gew.-% NMP. Tabelle 3 enthält die verwendeten Spinnparameter und die ermittelten Leistungsdaten der erhaltenen Membrane.

**Tabelle 3**

| Polyetheramid aus{8:2 (Terephthalsäure/Isophthalsäure)}-{5:5 (2,2'-Bis[4-(4'-aminophenoxy)-phenyl]-propan)/m-Phenylendiamin}-Polykondensat | | | | | | | |
|---|---|---|---|---|---|---|---|
| Spinnlösungszusammensetzung*⁾ [Gew.-% = T] | Lp [cm/s·bar·10⁻⁴] | | | P(Cl) [10⁻⁴cm/s] | Sk(Myo) nach 15 min [%] | Sk(Myo) nach 60 min [%] | Sk(Alb) [%] |
| | Lp(H₂O) | Lp(Alb) | Lp(H₂O) nach Albuminkontakt | | | | |
| 11T Polyetheramid | 16 | 3,9 | 17 | 11,5 | 68 | 76 | - |
| 2T PVP K90 | | | | | | | |

| | | | | | | | |
|---|---|---|---|---|---|---|---|
| *) Lösungsmittel: NMP; Nichtlösungsmittelsystem: 70 Gew.-% Wasser und 30 Gew.-% NMP | | | | | | | |
| PVP = Polyvinylpyrrolidon | | | | | | | |

### Beispiel 3.3: Membrane aus Polymer 3

In Beispiel 3.3 wurde das Polymer 3 (Beispiel 1, Tabelle 1) eingesetzt. Insbesondere handelt es sich bei der dampfsterilierten Membran um eine Polyetheramidmembran aus einem Polykondensat aus Terephthalsäuredichlorid/Isophthalsäuredichlorid im Molverhältnis 8:2 als Säurekomponente und 2,2'-Bis[4-(4'-aminophenoxy)-phenyl]-propan/m-Phenylendiamin im Molverhältnis 7:3 als Diaminkomponente. Die verwendeten Konzentrationen an Polyetheramid und PVP sind als Zusammensetzung der Spinnlösung der Spalte 1 in Tabelle 4 zu entnehmen. Als Nichtlösungsmittelsystem wurde Wasser eingesetzt. Tabelle 4 enthält die ermittelten Leistungsdaten der erhaltenen Membrane.

**Tabelle 4**

| Polyetheramid aus {8:2 (Terephthalsäure/Isophthalsäure)}-{7:3 (2,2'-Bis[4-(4'-aminophenoxy)-phenyl]-propan)/m-Phenylendiamin}-Polykondensat | | | | | | | |
|---|---|---|---|---|---|---|---|
| Spinnlösungszusammensetzung*⁾ [Gew.-% = T] | Lp [cm/s·bar·10⁻⁴] | | | P(Cl) [10⁻⁴cm/s] | Sk(Myo) nach 15 min [%] | Sk(Myo) nach 60 min [%] | Sk(Alb) [%] |
| | Lp(H₂O) | Lp(Alb) | Lp(H₂O) nach Albuminkontakt | | | | |
| 11T Polyetheramid | 73 | 6,8 | 80 | 8,25 | 83 | 92 | 16 |
| 3T PVP K90 | | | | | | | |
| 11T Polyetheramid | 24 | 4,3 | 14 | 11,2 | 20 | 22 | 0,9 |
| 2T PVP K90 | | | | | | | |
| 11T Polyetheramid | 88 | 5,5 | 66 | 10,5 | 71 | 76 | 6,8 |
| 1T PVP 90 | | | | | | | |

| | | | | | | | |
|---|---|---|---|---|---|---|---|
| *) Lösungsmittel: NMP; Nichtlösungsmittelsystem: Wasser | | | | | | | |
| PVP = Polyvinylpyrrolidon | | | | | | | |

### Beispiel 4

In Beispiel 4 wurde die Spinnbarkeit von Polyetheramidlösungen aus Polymer 1 (Beispiel 1) bestehend aus {8:2 (Terephtalsäuredichlorid/Isophtalsäuredichlorid)}-(2,2'-Bis[4-(4'-aminophenoxy)-phenyl]-propan)-Polykondensat untersucht, welches mit und ohne Zusatz von CaCl₂ hergestellt worden ist (Tabelle 5). Darüberhinaus ist für zwei Fälle der Calciumchloridextrakt angegeben. Man erkennt, daß die CaCl₂ Abgabe bei Membranen, die aus Lösungen gesponnen wurden, die salzfrei hergestellt wurden, deutlich geringer ist, als bei Membranen, die unter Verwendung von salzhaltigen Lösungen gesponnen wurden.

**Tabelle 5**

| Spinnbarkeit von Polyetheramidlösungen aus Polymer 1 (vgl. Tabelle 1) mit und ohne Salzzusatz und deren Calciumchlorid-Extrakte | | | | |
|---|---|---|---|---|
| Spinnlösungszusammensetzung | Viskosität [mPa·s] | Spinngeschwindigkeit [m/min] | Filtrationszeit bzgl. 2 µm Nuprofilter*⁾ [%] | Calciumchlorid -Extrakt nach GF**⁾ [mg/Filter] |
| 10T Polyetheramid | 12600 | 20 - 22 | 100 | |
| 3T PVP K90 | | | | |
| 3T CaCl₂ | | | | |
| 10T Polyetheramid | 2700 | > 40 | 10 - 15 | |
| 3T PVP K90 | | | | |
| 10,2T Polyetheramid (T34) | 12980 | 25 | | 32 |
| 3T PVP K90 | | | | |
| 3T CaCl₂ ***⁾ | | | | |
| 11T Polyetheramid (T34) | 2960 | 38 | | < 0,5 |
| 3T PVP K90 ***⁾ | | | | |

| | | | | |
|---|---|---|---|---|
| *) Best.-Nr. SS-6FW-MM, 2 µm, Fa. B.E.S.T (Pliezhausen) | | | | |
| **) Extraktionsbedingungen: 1 Dialysatorbündel mit 1,4 m² Membranfläche und 20 g Trockengewicht wird 16 h bei 60°C mit VE-Wasser (200 ml) extrahiert und CaCl₂ ionenchromatographisch bestimmt. | | | | |
| ***) Fällmedium: 70 % H₂O + 30 % NMP | | | | |
| PVP = Polyvinylpyrrolidon | | | | |

### Beispiel 5

In Beispiel 5 wurde die Komplementaktivierung und die Cytotoxizität an Hand des Polymer 1 untersucht.
Für das Polyetheramid aus {8:2 (Terephtalsäuredichlorid/Isophtalsäuredichlorid)} und 2,2'-Bis[4-(4'-aminophenoxy)-phenyl]-propan wird in Tabelle 6 die Blutverträglichkeit durch die Komplementaktivierung als TCC-Wert im Vergleich zu anderen gängigen Dialysemembranen quantifiziert dargestellt.

**Tabelle 6**

| Blutverträglichkeit gemessen durchKomplementaktivierung als TCC-Generierung in Human Plasma im Vergleich zu herkömmlichen Dialysemembranen | |
|---|---|
| Membran | TCC Generierung während 20 min Plasmakontakt [ng/ml·min] |
| Polyetheramid | 13 - 79 |
| Cuprophan® (Akzo) | 560-2200 |
| Polyamid (Gambro) | 13-21 |

| | |
|---|---|
| *⁾ Membranfläche 310 cm² Methode nach R. Deppisch, Kidney International, 37, 696 (1990) | |

Daraus wird deutlich, daß das Polyetheramid auf demselben Niveau wie die gut bewertete Polyamidmembran liegt.
Mit demselben Polyetheramid wurde die Cytotoxizität durch Bestimmung der Inhibierung nach ICG-Test SF/6TI-014 bestimmt. Dabei wurde keine Inhibierung des Zellwachstums gefunden.

Weitere Vorteile und Ausführungsformen der Erfindung ergeben sich aus den nachfolgenden Patentansprüchen.

## Patentansprüche

1. Verfahren zur Herstellung von Polyetheramidlösungen, bei dem ein oder mehrere Dicarbonsäurederivate der allgemeinen Formel I 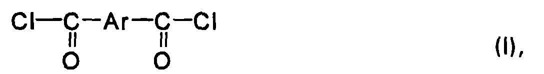 worin
Ar einen zweiwertigen, aromatischen oder heteroaromatischen Rest bedeutet, wobei sich die zwei Carbonylgruppen an nicht benachbarten Ringkohlenstoffatomen, d.h. nicht in ortho-Stellung zueinander befinden, und der Ar-Rest gegebenenfalls mit einem oder zwei verzweigten oder unverzweigten Resten aus der Gruppe der C₁-C₃-Alkyl-, C₁-C₃-Alkoxy-, Aryl-, Aryloxy-, C₁-C₆-Perfluoralkyl-, C₁-C₆-Perfluoralkoxyreste, Fluor, Chlor, Brom und/oder Jod substituiert ist, mit ein oder mehreren aromatischen Diaminen der allgemeinen Formel II 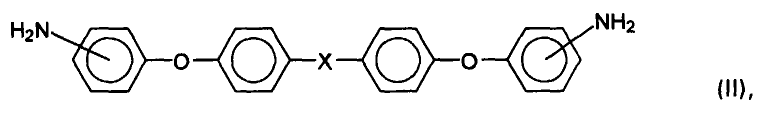 worin
X für eine Gruppe -C(CH₃)₂-, -C(CF₃)₂, -CO-, -SO-, -SO₂-, -CH₂-, -S- oder -O- oder eine direkte Bindung steht, wobei gegebenenfalls bis zu 50 Mol-% der Diamine II durch m-Phenylendiamin ersetzt sind, in aprotischen polaren Lösungsmitteln polykondensiert werden dadurch gekennzeichnet, daß man in die nach der Beendigung der Polykondensation erhaltene Polymerlösung eine zur Neutralisation des gebildeten HCl ausreichende Menge Ammoniak einleitet und entstehendes Ammoniumsalz abfiltriert.

2. Verfahren nach Anspruch 1, dadurch gekennzeichnet, daß man die nach Filtration erhaltene Polymerlösung ohne Isolation des Polymers weiterverarbeit.

3. Verfahren nach Anspruch 1 oder 2, dadurch gekennzeichnet, daß man als Lösungsmittel für die Polykondensationsreaktion Amidverbindungen einsetzt.

4. Verfahren nach Anspruch 3, dadurch gekennzeichnet, daß man als Lösungsmittel N-Methyl-2-pyrrolidon (NMP) oder N,N-Dimethylacetamid verwendet.

5. Verfahren nach einem oder mehreren der vorhergehenden Ansprüche , dadurch gekennzeichnet, daß man Polymerlösungen mit einem Restgehalt von < < 0,1 % Chlorid erhält.

6. Verfahren nach einem oder mehreren der vorhergehenden Ansprüche, dadurch gekennzeichnet, daß man die Menge der zu polykondensierenden Monomeren so wählt, daß die Konzentration des Polymerisats in der Lösung zwischen 3 und 50 Gew.-% ist.

7. Verwendung einer Polymerisatlösung gemäß einem oder mehreren der Ansprüche 1 bis 6 zur Herstellung semipermeabler, poröser, asymmetrischer Membranen.

8. Verwendung nach Anspruch 7 zur Herstellung von Hohlfasern.

9. Verwendung nach Anspruch 7 zur Herstellung von Flachmembranen.

10. Semipermeable, poröse, asymmetrische Membran aufweisend ein Polyaramid, enthaltend als wiederkehrende Struktureinheiten ein oder mehrere Struktureinheiten der allgemeinen Formel I' 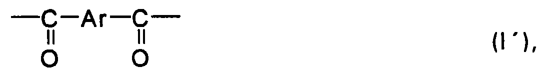 worin
Ar einen zweiwertigen, aromatischen oder heteroaromatischen Rest bedeutet,wobei sich die zwei Carbonylgruppen an nicht benachbarten Ringkohlenstoffatomen, d.h. nicht in ortho-Stellung zueinander befinden, und der Ar-Rest gegebenenfalls mit einem oder zwei verzweigten oder unverzweigten Resten aus der Gruppe der C₁-C₃-Alkyl-, C₁-C₃-Alkoxy-, Aryl-, Aryloxy-, C₁-C₆-Perfluoralkyl-, C₁-C₆-Perfluoralkoxyreste, Fluor, Chlor, Brom und/oder Jod substituiert ist, und bezogen auf die Summe von (II') und (III') zu 50 bis 100 mol % Struktureinheiten der Formel (II') 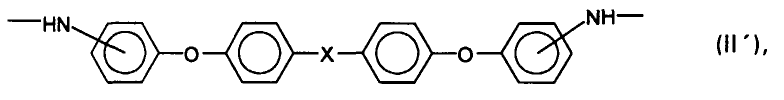 worin
X für eine Gruppe -C(CH₃)₂-, -C(CF₃)₂, -CO-, -SO-, -SO₂-, -CH₂-, -S- oder -O- oder eine direkte Bindung steht, und bezogen auf die Summe von (II') und (III') zu 0 bis 50 mol % Struktureinheiten der Formel (III') 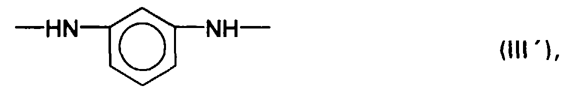 wobei die Membran nach dem Phaseninversionsverfahren erhalten wird, bei dem eine homogene Polymerisatlösung mit einem eine Fällflüssigkeit aufweisenden Fällbad kontaktiert wird, wobei die Fällflüssigkeit mit dem Lösungsmittel der Polymerisatlösung mischbar ist und die in der Polymerisatlösung gelösten Polymerisate als Membran ausgefällt werden, dadurch gekennzeichnet, daß die Polymerisatlösung einen Chloridgehalt von weniger als 0,1 Gewichtsprozent bezogen auf das Gesamtgewicht der Polymerisatlösung aufweist.

11. Membran nach Anspruch 10, dadurch gekennzeichnet, daß sie auf einer für strömungsfähige Medien durchlässigen Trägerschicht aus Kunststoffvlies oder auf einem Gewebe angeordnet ist.

12. Membran nach Anspruch 11, dadurch gekennzeichnet, daß sie eine Hohlfasermembran ist.

13. Verfahren zur Herstellung einer semipermeablen, porösen, asymmetrischen Membran bei dem eine Lösung enthaltend ein Polymerisat wenigstens eines Polyaramids enthaltend als wiederkehrende Struktureinheiten ein oder mehrere Struktureinheiten der allgemeinen Formel I' 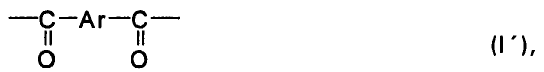 worin
Ar einen zweiwertigen, aromatischen oder heteroaromatischen Rest bedeutet, wobei sich die zwei Carbonylgruppen an nicht benachbarten Ringkohlenstoffatomen, d.h. nicht in ortho-Stellung zueinander befinden, und der Ar-Rest gegebenenfalls mit einem oder zwei verzweigten oder unverzweigten Resten aus der Gruppe der C₁-C₃-Alkyl-, C₁-C₃-Alkoxy-, Aryl-, Aryloxy-, C₁-C₆-Perfluoralkyl-, C₁-C₆-Perfluoralkoxyreste, Fluor, Chlor, Brom und/oder Jod substituiert ist, und bezogen auf die Summe von (II') und (III') zu 50 bis 100 mol % Struktureinheiten der Formel (II') 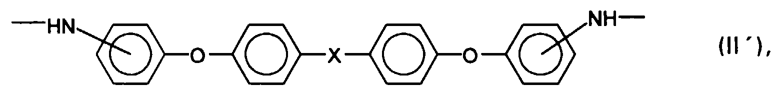 worin
X für eine Gruppe -C(CH₃)₂-, -C(CF₃)₂, -CO-, -SO-, -SO₂-, -CH₂-, -S- oder -O- oder eine direkte Bindung steht, und bezogen auf die Summe von (II') und (III') zu 0 bis 50 mol % Struktureinheiten der Formel (III') 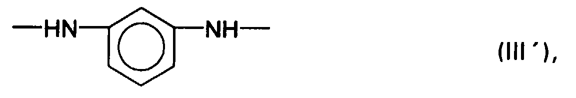 mit einem eine Fällflüssigkeit aufweisenden Fällbad kontaktiert wird, wobei die Fällflüssigkeit mit dem Lösungsmittel der Polymerisatlösung mischbar ist und die in der Polymerisatlösung gelösten Polymerisate als Membran ausgefällt werden, dadurch gekennzeichnet, daß man als Polymerisatlösung eine durch Polykondensation nach Anspruch 1 erhaltene Lösung einsetzt.

14. Verfahren nach Anspruch 13, dadurch gekennzeichnet, daß die aus der Polykondensation resultierende Lösung ohne Isolation des Polymerisats zur Membranherstellung nach dem Phaseninversionsverfahren verwendet wird.
